# EUROPEAN PATENT SPECIFICATION

(11) **EP 0 608 181 B1**
(45) Date of publication and mention of the grant of the patent: **17.04.2002**
(21) Application number: 94400123.9
(22) Date of filing: 20.01.1994
(51) Int. Cl.: H04N 1/32, H04N 1/00, H04M 11/00, H04N 1/327

(54) **Facsimile apparatus with telephone set**
Faksimilegerät mit Telefonapparat
Appareil de facsimilé avec poste téléphonique

(30) Priority: 20.01.1993 JP 775493
(43) Date of publication of application: 27.07.1994
(73) Proprietor: CANON KABUSHIKI KAISHA, Tokyo (JP)
(72) Inventor: Takeda, Tomoyuki, c/o Canon K. K., Ohta-ku, Tokyo (JP)
(74) Representative: Rinuy, Santarelli

(56) References cited:
- EP-A- 0 373 921
- EP-A- 0 452 859
- EP-A- 0 531 217

## Description

### BACKGROUND OF THE INVENTION

### Field of the Invention

The present invention relates to a facsimile apparatus, and more particularly to a facsimile apparatus with a telephone set, and further particularly to an NCU unit thereof.

### Related Background Art

EP-A-0 452 859 discloses a facsimile apparatus with a handset.

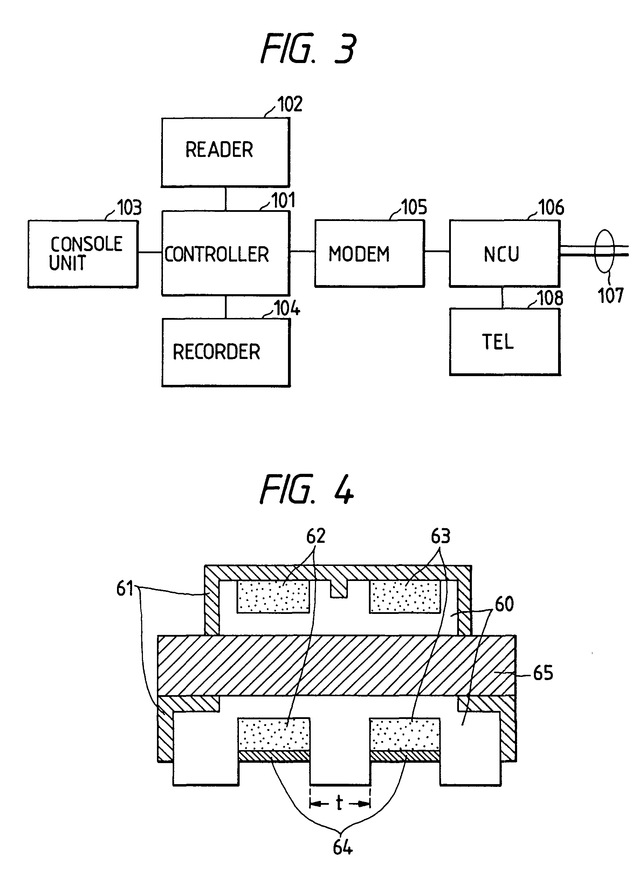

Referring to Fig. 3, a facsimile apparatus with a telephone set is explained. Numeral 101 denotes a control unit for controlling an overall facsimile apparatus. The control unit controls relays, discriminates a CNG signal and discriminates a Ci signal. Numeral 102 denotes a reader for reading an image. Numeral 103 denotes a console unit including a display and keys. Numeral 104 denotes a recorder for recording the image. Numeral 105 denotes a modem. Numeral 106 denotes an NCU which permits the connection of a handset 108 and a daughter (or subsidiary) telephone set such as an automatic responding and recording telephone set. Numeral 107 denotes a telephone line. Numeral 108 denotes a handset attached to the facsimile apparatus. The handset 108 and a daughter telephone set are connected to the telephone line 107 with a predetermined priority.

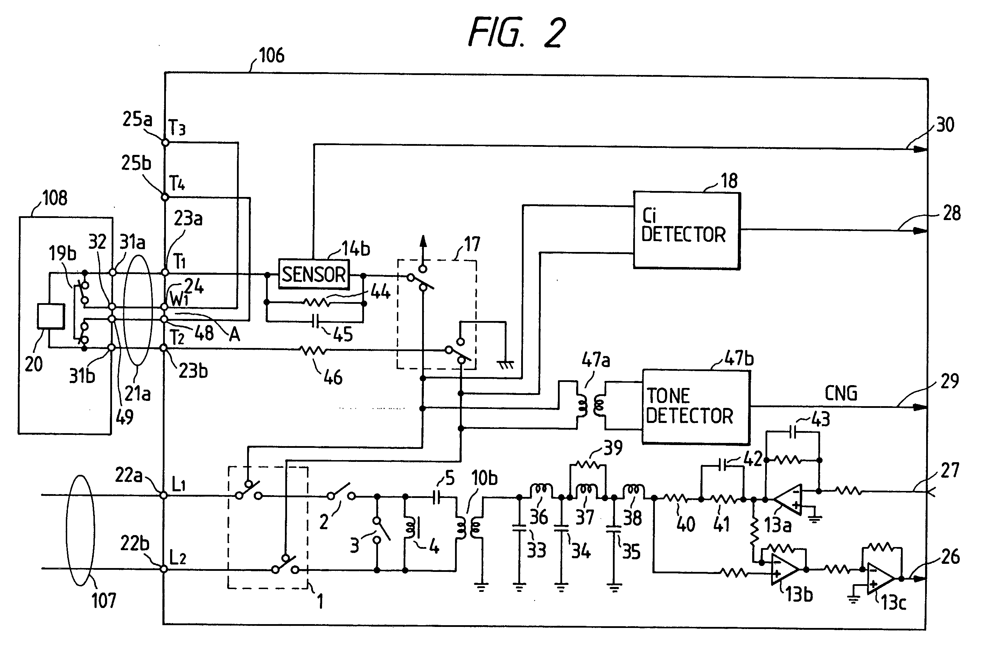

A prior art NCU is explained with reference to Fig. 2. Numeral 1 denotes a CML relay for switching the telephone line 107 between the facsimile apparatus and the handset 108 or the daughter telephone set. Numeral 2 denotes a P relay for generating a dialing pulse and numeral 3 denotes an S relay which is closed while the dialing pulse is generated to reduce an affect by the on/off transition of the P relay. Numeral 4 denotes an RET coil for forming a DC loop. Numeral 5 denotes a DC blocking capacitor. Numeral 10b denotes a transformer which usually has primary and secondary impedances of 600 Ω. Numerals 33 to 39 denote coils, capacitors and resistors which form a fare charge filter for eliminating a fare charge pulse (or metering pulse). Numerals 40, 41 and 42 denote resistors and a capacitor of a terminating impedance. Numeral 43 denotes a capacitor for compensating a frequency characteristic by the fare charge filter.

Numeral 14b denotes a current sensor which detects a magnetic field generated by a current flowing through a coil by using a Hall element.

An insertion loss is created by the insertion of the current sensor 14b in a signal line T1 and the impedance balance with a signal line T2 is destroyed. The Europe defines a standard for the impedance balance, and in Sweden who defines a particularly severe standard for the countermeasure, a resistor 44 and a capacitor 44 are inserted in parallel to a current sensor 41b and a resistor 46 of several Ω is inserted even in the line T2 to which no current sensor is inserted.

Numerals 44 and 45 denote a bypass circuit for suppressing the impedance balance and the insertion loss within the standard, and numeral 46 denotes a resistor inserted in the line having no sensor inserted therein for the same purpose. In the prior art, the resistors 44 and 46 are 8.2 Ω and the capacitor 45 is 100 µF.

Numeral 17 denotes an H relay for supplying a voltage to the handset 108 or the daughter telephone set when the relay 1 is switched to the facsimile apparatus. By switching the H relay to the power supply as soon as a Ci signal is received, the facsimile reception may be attained without: ringing the handset or the daughter telephone set. Numeral 18 denotes a Ci detector for detecting the Ci signal.

As will be explained later, in order to automatically switch the telephone set and the facsimile apparatus while permitting the connection of the daughter telephone set to the facsimile apparatus and the connection of the automatic recording and responding telephone set thereto, it is necessary to detect a CNG signal (1100 Hz) sent from a transmitting facsimile apparatus. In the prior art apparatus, the CNG signal is detected by a tone detector 47b through the transformer 47a.

Numerals 47a and 47b denote CNG detector circuit. It separates a signal sent from the telephone line from the line by the transformer 47a and the CNG signal is detected by the tone detector 47b.

Numeral 26 denotes a receiving signal line of the facsimile apparatus, numeral 27 denotes a transmitting signal line of the facsimile apparatus and numeral 28 denotes a signal line which is rendered low when the Ci signal is received. Numeral 29 denotes an output of the tone detector 47b by which the CNG signal is detected. Numeral 30 denotes a digital output which is rendered low when a current flowing through the current sensor 14a is higher than a threshold (which is between 5 mA and 10 mA in an embodiment) and by which the off-hook of the handset 108 or the daughter telephone set is detected.

Numerals 22a and 22b denote L1 and L2 of the line, respectively. Numerals 23a and 23b denote T1 and T2 connected to the handset. When a CML relay is switched to the telephone set, L1 and L2 are connected to T1 and T2, respectively. Numerals 24 and 48 denote return lines from the handset. Numerals 25a and 25b denote T3 and T4 connected to the daughter telephone set. T3 is connected to a return line W1 from the handset and T4 is connected to a return line A from the handset.

The handset is now explained. Numeral 19b denotes a hook switch which connects and disconnects T1 and W1, and T2 and W2, respectively. When the handset is hooked on, the switch is closed and T1 and W1, and T2 and A are connected, respectively. When the handset if hooked off, the switch is opened and T1 and W1, and T2 and A are disconnected, respectively, so that the daughter telephone set is disconnected from the telephone line. In this manner, a predetermined priority is assigned to the handset and the daughter telephone set to prevent the parallel connection. Numeral 20 denotes a telephone line.

A two-pole hook switch 19b attached to the facsimile apparatus is used to cut the return lines from the handset in dual lines.

Numerals 32 and 49 denote terminals which are connected to W1 and A of the NCU.

The handset and the NCU of the facsimile apparatus are connected by a curled cord 21b. Since the curled cord includes a resistance, it is necessary to provide a two-pole switch and a signal line 49-48 which is of the same length as a signal line 32-24 in order to set an impedance balance within the standard.

In the prior art apparatus, however, since the resistor is inserted in the line T2 to which the line sensor is not connected, an insertion loss increases. Accordingly, a big effort should be paid to bring both the impedance balance and the insertion loss within the standard. Further, since the handset also requires a two-pole hook switch and a curled cord 21b which connects the facsimile apparatus and the handset requires one more wire compared to that for a single pole switch. All those are factors to increase the cost.

Secondly, since the transformer 47a is used to detect the CNG signal, a packaging area increases and the cost also increases.

### SUMMARY OF THE INVENTION

It is an object of the present invention to improve a facsimile apparatus in the light of the above problems.

It is another object of the present invention to bring the impedance balance within the PTT standard and reduce the insertion loss by using a handset having means for connecting and disconnecting T1 and W1 of Fig. 2, a current sensor connected to T2 for detecting a current flowing through a coil, a resistor and a capacitor connected in parallel to the current sensor, a daughter telephone set connecting T4 connected to daughter telephone set connecting T3 and T2 connected to W1 and a curled cord for connecting a facsimile apparatus and the handset, and by utilizing the impedances of the coil of the current sensor and the resistor and the capacitor connected in parallel to the current sensor and a resistance of the curled cord.

It is still another object of the present invention to permit the detection of a tone signal by an analog output of a current sensor by using the current sensor capable of detecting an analog current flowing through a coil and series connected resistor and capacitor connected in parallel to the coil.

Other objects of the present invention will be apparent from the following detailed description of the preferred embodiments and the drawings.

The objects are achieved by an apparatus according to claim 1. The dependent claims relate to preferred embodiments thereof.

### BRIEF DESCRIPTION OF THE DRAWINGS

Fig. 1 shows a block diagram of an NCU of a facsimile apparatus with a telephone set of an embodiment of the present invention,
Fig. 2 shows a block diagram of an NCU of a prior art facsimile apparatus with a telephone set.
Fig. 3 shows an overall block diagram of the facsimile apparatus with the telephone set of the embodiment.
Fig. 4 shows a structure of a noise blocking transformer used in the NCU of the embodiment,
Fig. 5 shows a frequency characteristic of receiver attenuation in the embodiment,
Fig. 6 shows a block diagram of a current sensor used in the NCU of the embodiment, and
Fig. 7 shows a block diagram of a current sensor used in the NCU of the prior art apparatus.

### DETAILED DESCRIPTION OF THE PREFERRED EMBODIMENTS

An embodiment of the present invention is now explained with reference to the drawings.

A block diagram of a facsimile apparatus with a telephone set of the present embodiment is identical to that of the prior art apparatus shown in Fig. 3.

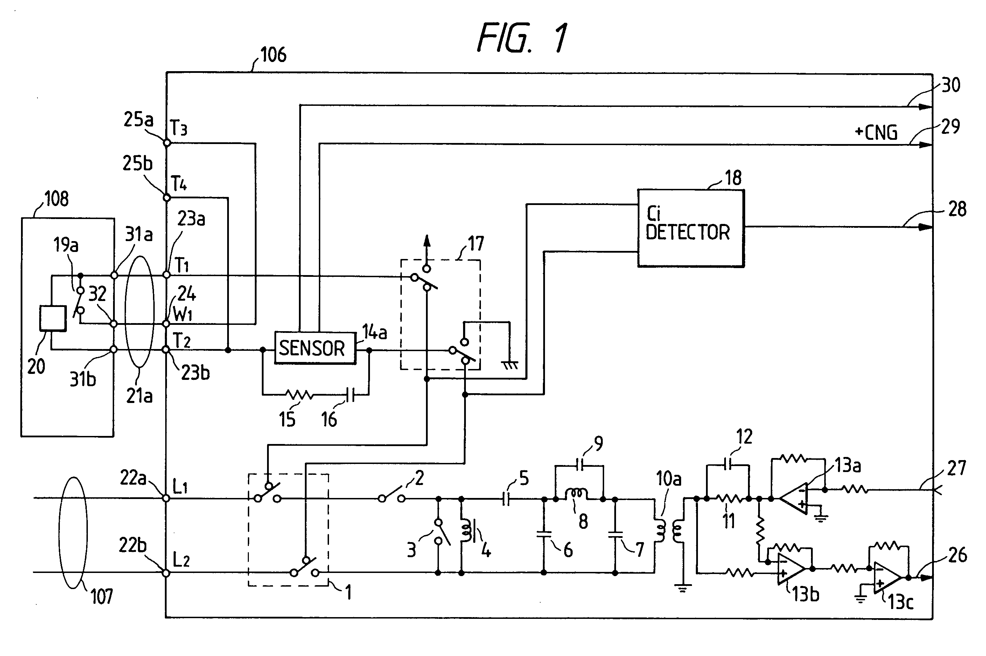

An NCU of the present embodiment is explained with reference to Fig. 1. Numeral 1 denotes a CML relay which switches a telephone line 107 between the facsimile apparatus and a handset 108 or a daughter telephone set. Numeral 2 denotes a P relay for generating a dialing pulse, and numeral 3 denotes an S relay which is closed while the dialing pulse is generated to reduce an affect of an on/off transition of the P relay. Numeral 4 denotes an RET coil which forms a DC loop. Numeral 5 denotes a DC blocking capacitor. Numerals 6 to 9 form a fare charge filter together with a noise blocking transformer 10a. Numerals 6, 7 and 9 denote capacitors and numeral 8 denotes a choke coil. In the present embodiment, the capacitor 6 is 0.033 µF, the capacitor 7 is 0.056 µF, the coil 8 is 15 mH and the capacitor 9 is 6800 pF. A peak of the attenuation is set to 16 KHz to comply with the frequency of the fare charge pulse (16 KHz), and it is primarily determined by 8 and 9. Since the inductance of the coil 8 is determined to comply with a leakage inductance of the noise blocking transformer, the peak of the attenuation is actually adjusted by changing the capacitance of the capacitor 9. For example, in the NCU for Switzerland, the capacitor 9 is 12000 pF to comply with the frequency of the fare charge pulse (12 KHz).

Numeral 10a denotes a noise blocking transformer. A construction of the transformer will be described later with reference to Fig. 4. Primary and secondary impedances of the transformer are 1200 Ω. Numerals 11 and 12 denote a resistor and a capacitor of a terminating impedance which determines a return loss of the NCU. In the present embodiment, the resistor 11 is 820 Ω and the capacitor 12 is 0.022 µF. Numerals 13a, 13b and 13c denote operational amplifiers which form a 2-4 wire conversion circuit.

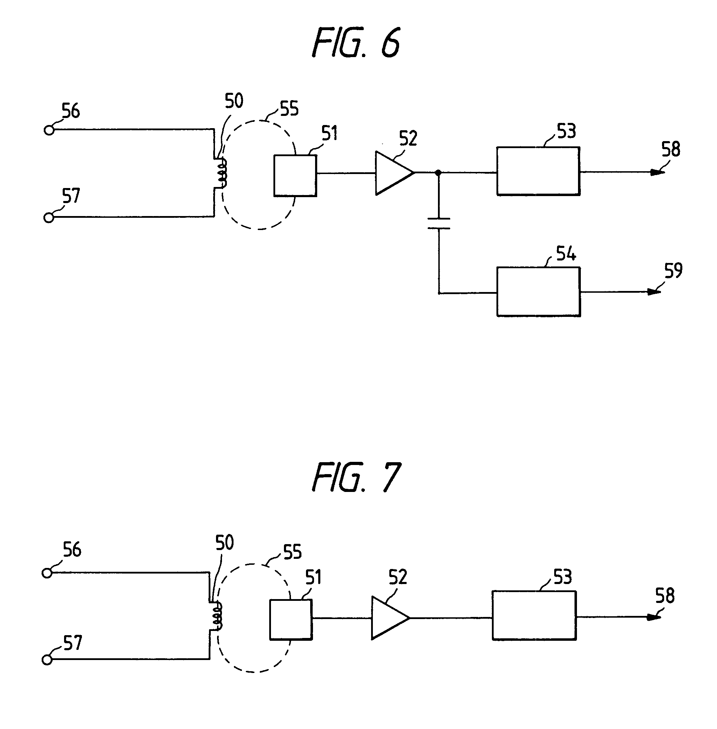

Numeral 14a denotes a current sensor with an analog signal output. The current sensor detects a magnetic field generated by a current flowing through the coil by using a Hall element and a detail thereof will be explained later with reference to Fig. 6. Numerals 15 and 16 denote a bypass circuit for bringing the impedance balance and the insertion loss within the standard. In the present embodiment, the resistor 15 is 5.6 Ω and the capacitor 16 is 33 µF. A resistance of the coil of the current sensor 10a is approximately 4.3 Ω and an inductance thereof is approximately 1.38 mH. In the present embodiment, the impedance balance is higher than 60 dB (German standard 52 dB or higher) in 300 Hz - 3.4 KHz, and the insertion loss is lower than 0.3 dB (German standard 0.5 dB or lower) when measured with input and output impedances of 200 Ω at 16 KHz.

Numeral 17 denotes an H relay for supplying a voltage to the handset 108 and the daughter telephone set when the CML relay is switched to the facsimile apparatus. By switching the H relay to the power supply as soon as the Ci signal is received, the facsimile reception may be attained without ringing the handset and the daughter telephone set. Numeral 18 denotes a Ci detector for detecting the Ci signal.

Numeral 26 denotes a receiving signal line, numeral 27 denotes a transmitting signal line and numeral 28 denotes a signal line which is rendered low when the Ci signal is received. Numeral 29 denotes an analog output signal line of a current flowing through the current sensor 14a. The CNG signal is detected by a signal on this signal line. In the prior art apparatus, since the capacitance of the capacitor 45 of Fig. 2 is large, little current flows through the coil of the current sensor when the frequency rises. In the prior art apparatus, this does not bring an actual damage because the current sensor 14b has no analog output. However, if the current sensor having the analog output 14a is used in the prior art apparatus, it will be difficult to detect the CNG signal of even -30 dBm in the audio frequency band because a sufficient S/N ratio is not assured. Accordingly, it is necessary to provide a tone detector for the CNG detection.

In the present embodiment, the CNG signal of 0 to -49 dBm can be detected. Numeral 30 denotes a digital output which is rendered low when the current flowing through the current sensor 14a is higher than a threshold (between 5 mA and 10 mA in the present embodiment) and the off-hook of the handset 108 and the daughter telephone set is detected by this signal.

Numerals 22a and 22b denote L1 and L2 of the line. Numerals 23a and 23b denote T1 and T2 connected to the handset, respectively. When the CML relay is switched to the telephone set, L1 and T1, and L2 and T2 are connected, respectively. Numeral 24 denotes a return line from the handset. Numerals 25a and 25b denote T3 and T4 connected to the daughter telephone set. T3 is connected to a return line W1 from the handset and T4 is connected to T2.

The handset is now explained. Numeral 19a denotes a hook switch for connecting and disconnecting T1 and W1. When the handset is hooked on, the switch is closed and T1 and W1 are connected. When the handset is hooked off, the switch is opened and T1 and W1 are disconnected so that the daughter telephone set is disconnected from the telephone line. In this manner, a predetermined priority is assigned to the handset and the daughter telephone set to prevent parallel connection. Numeral 20 denotes a telephone line.

Terminals 31a and 31b are connected to T1 and T2 of the NCU, respectively, and a terminal 32 is connected to W1.

The handset and the NCU of the facsimile apparatus are connected through a curled cord 21a. The curled cord includes a resistance and a resistance between 23a and 24 is approximately 4 Ω when the hook switch 19a of the handset is closed. In the present embodiment, a return line from the handset is provided only on one line and the other line T4 is directly connected by a circuit board of the NCU. The impedances of T3 and T4 are unbalanced and the current sensor having the resistance is connected to the line having no return line so that the impedances are balanced as a whole.

Fig. 4 shows a construction of the noise blocking transformer used in the NCU of the present embodiment. Numeral 60 denotes a bobbin, numeral 61 denotes a protection cover, numeral 62 denotes a primary coil, numeral 63 denotes a secondary coil, numeral 64 denotes an insulating tape and numeral 65 denotes a core. The primary coil 62 and the secondary coil 63 are wound coaxially and parallelly along the core 65. An insulating breakdown voltage between the primary coil and the secondary coil is assured by a gap t between the coils. In the present embodiment, t =3.2 mm to comply with the IEC 950 standard. A primary leakage inductance Lp and a secondary leakage inductance Ls are determined by the gap t. In the present embodiment, the transformer can establish a high attenuation frequency band by using the leakage inductance.

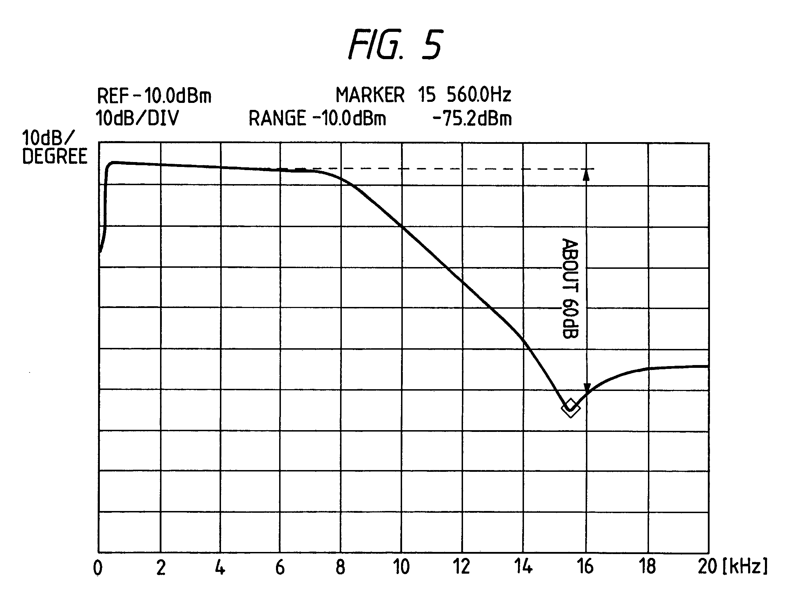

Fig. 5 shows a level of the receiving signal line 26 when signals are received from T1 and T2. As seen from Fig. 5, the attenuation at 16 KHz which corresponds to the Germany fare charge pulse frequency is approximately 60 dBm. This is sufficient attenuation to eliminate the affect of the fare charge pulse, and there is no affect of the fare charge pulse to an image in the present embodiment.

Fig. 6 shows a block diagram of the current sensor 14a with the analog output of the present embodiment. It generates a magnetic field 55 in accordance with a current flowing from 56 connected to the primary circuit of the line to 57. An inductance of the coil is approximately 1.38 mH and a resistance is approximately 4.3 Ω. Numeral 51 denotes a Hall element which generates a voltage in accordance with the magnetic field 55 generated by the coil. Numeral 52 denotes a buffer amplifier. Numeral 53 denotes a comparator. Numeral 158 denotes an output signal from the comparator and it is low when the current is higher than a predetermined level (5 - 10 mA in the present embodiment) and high when the current is lower than the predetermined level. Numeral 54 denotes an amplifier including a band-pass filter for amplifying the analog signal from 52.

A block diagram of the prior art current sensor shown in Fig. 2 is shown for comparison purpose.

Fig. 7 shows a block diagram of the prior art current sensor 14b. It does not include the analog output unlike Fig. 6.

The present embodiment differs from the prior art in the following points:
(1) Of the resistors and the capacitors added to countermeasure the impedance balance, the resistor inserted in the line to which the current sensor is not connected is eliminated.
(2) Only one return line from the handset is used and the number of wires of the curled cord for connecting the handset and the facsimile apparatus is reduced by one.
(3) The hook switch of the handset 19 is of single pole instead of double pole.
(4) The transformer in the preceding stage of the tone detector is eliminated.

In accordance with the present invention, it is enabled to bring the impedance balance within the PTT standard and reduce the insertion loss by using a handset having means for connecting and disconnecting T1 and W1 of Fig. 2, a current sensor connected to T2 for detecting a current flowing through a coil, a resistor and a capacitor connected in parallel to the current sensor, a daughter telephone set connecting T4 connected to daughter telephone set connecting T3 and T2 connected to W1 and a curled cord for connecting a facsimile apparatus and the handset, and by utilizing the impedances of the coil of the current sensor and the resistor and the capacitor connected in parallel to the current sensor and a resistance of the curled cord.

The impedance balance can be brought within the standard without inserting the resistor in the line to which the current sensor is not connected. Further, the facsimile switch in the handset may be a single pole switch for connecting and disconnecting T1 and W1, and the number of wires of the cord which connects the handset to the facsimile switch is reduced by one. Accordingly, the cost is reduced.

Secondly, it is permitted to detect a tone signal by an analog output of a current sensor by using the current sensor capable of detecting an analog current flowing through a coil and series connected resistor and capacitor connected in parallel to the coil. Accordingly, the transformer for isolating the primary line from the tone detector required in the prior art apparatus is not necessary. As a result, the packaging area of the NCU is reduced and the cost is reduced.

## Claims

1. A facsimile apparatus with a handset comprising:
first and second connection terminals (L1, L2) for connecting a telephone line;
third and fourth connection terminals (T3, T4) for connecting an external telephone set;
a first line (T1) for connecting between said first and third connections terminals;
a second line (T2) for connecting between said second and fourth connection terminals;
a current sensor (14a) for detecting a facsimile signal, said current sensor being provided on one of the first and second lines;
a handset (108) for speech communication, said handset having a switch (19a) for disconnecting said external telephone set from the telephone line; and
a curled cord (21a) for connecting said handset to the first and second lines,
**characterised in that**,
said curled cord comprises a first wire (31a-23a), a second wire (31b-23b) and a third wire (32-24),
said first and third wires being connected, in series, to one (T1) of the first and second lines that is not connected to said current sensor, as a part of said one (T1) of the first and second lines that is not connected to said current sensor, and
said second wire being connected in parallel to the other one (T2) of the first and second lines that is connected to said current sensor,
when said handset being off-hooked, said switch disconnecting the third wire (32-24) from the first wire (31a-23a), while when said handset being not off-hooked, said switch connecting the third wire to the first wire in series, and
an impedance balance between the first line (T1) and the second line (T2) is attained by difference in a length between the first and second lines by means of serial connection of the first (31a-23a) and third (32-24) wires of said curled cord to said one of the first and second lines that is not connected to said current sensor.

2. A facsimile apparatus with a handset according to Claim 1, **characterized in that** said current sensor (14a) detects a CNG signal.

3. A facsimile apparatus with a handset according to Claim 2, **characterized in that** the facsimile apparatus and the telephone are switched by the CNG signal detected by said current sensor (14a).

4. A facsimile apparatus with a handset according to Claim 1, **characterized in that** said current sensor (14a) detects an off-hook of an externally connected telephone set.

## Patentansprüche

1. Faksimilegerät mit einem Handapparat, mit
einem ersten und einem zweiten Verbindungsanschluß (L1, L2) zum Anschließen einer Telefonleitung,
einem dritten und einem vierten Verbindungsanschluß (T3, T4) zum Anschließen eines externen Telefonapparats,
einer ersten Leitung (T1) für eine Verbindung zwischen dem ersten und dem dritten Verbindungsanschluß,
einer zweiten Leitung (T2) für eine Verbindung zwischen dem zweiten und dem vierten Verbindungsanschluß,
einem Stromsensor (14a) zur Erfassung eines Faksimilesignals, wobei der Stromsensor an einer Leitung aus der ersten und der zweiten Leitung vorgesehen ist,
einem Handapparat (108) für eine Sprachkommunikation, wobei der Handapparat einen Schalter (19a) zum Trennen des externen Telefonapparats von der Telefonleitung aufweist, und
einer gewundenen Leitung (21a) zum Verbinden des Handapparats mit der ersten und der zweiten Leitung,
**dadurch gekennzeichnet, dass**
die gewundene Leitung eine erste Leitungsader (31a-23a), eine zweite Leitungsader (31b-23b) und eine dritte Leitungsader (32-24) beinhaltet,
die erste und die dritte Leitungsader in Serie mit einer Leitung (T1) aus der ersten und der zweiten Leitung, die nicht mit dem Stromsensor verbunden ist, als ein Teil der einen Leitung (T1) aus der ersten und der zweiten Leitung verbunden ist, die nicht mit dem Stromsensor verbunden ist, und
die zweite Leitungsader parallel zu der weiteren einen Leitung (T2) aus der ersten und der zweiten Leitung verbunden ist, die mit dem Stromsensor verbunden ist,
wobei, wenn der Handapparat abgehoben ist, der Schalter die dritte Leitungsader (32-24) von der ersten Leitungsader (31a-23a) trennt, während, wenn der Handapparat nicht abgehoben ist, der Schalter die dritte Leitungsader mit der ersten Leitungsader in Serie verbindet, und
ein Impedanzabgleich zwischen der ersten Leitung (T1) und der zweiten Leitung (T2) durch eine Differenz in der Länge zwischen der ersten und der zweiten Leitung mittels einer Serienschaltung der ersten (31a-23a) und der dritten (32-24) Leitungsader der gewundenen Leitung mit der einen Leitung aus der ersten und der zweiten Leitung erzielt wird, welche nicht mit dem Stromsensor verbunden ist.

2. Faksimilegerät mit einem Handapparat nach Anspruch 1,
**dadurch gekennzeichnet, dass**
der Stromsensor (14a) ein CNG-Signal erfasst.

3. Faksimilegerät mit einem Handapparat nach Anspruch 2,
**dadurch gekennzeichnet, dass**
das Faksimilegerät und das Telefon durch das durch den Stromsensor (14a) erfasste CNG-Signal geschaltet werden.

4. Faksimilegerät mit einem Handapparat nach Anspruch 1,
**dadurch gekennzeichnet, dass**
der Stromsensor (14a) ein Abheben eines extern verbundenen Telefonapparats erfasst.

## Revendications

1. Télécopieur pourvu d'un récepteur téléphonique, comprenant :
des première et deuxième bornes de connexion (L1, L2) pour connexion d'une ligne téléphonique ;
des troisième et quatrième bornes de connexion (T3, T4) pour connexion d'un téléphone externe ;
une première ligne (T1) pour connexion entre lesdites première et troisième bornes de connexion ;
une seconde ligne (T2) pour connexion entre lesdites deuxième et quatrième bornes de connexion ;
un capteur de courant (14a) servant à détecter un signal de télécopie, ledit capteur de courant étant disposé sur l'une des première et seconde lignes ;
un récepteur téléphonique (108) pour communication vocale, ledit récepteur téléphonique comportant un commutateur (19a) pour déconnexion dudit téléphone externe de la ligne téléphonique ; et
un cordon en serpentin (21a) pour connexion dudit récepteur téléphonique aux première et seconde lignes,
**caractérisé en ce que**,
ledit cordon en serpentin comprend un premier fil (31a- 23a), un deuxième fil (31b-23b) et un troisième fil (32-24),
lesdits premier et troisième fils étant connectés, en série, à l'une (T1) des première et seconde lignes qui n'est pas connectée audit capteur de courant, faisant partie de ladite une (T1) desdites première et seconde lignes qui n'est pas connectée audit capteur de courant, et
ledit deuxième fil étant connecté en parallèle à l'une autre (T2) des première et seconde lignes qui est connectée audit capteur de courant,
lorsque ledit récepteur téléphonique est décroché, ledit commutateur déconnectant le troisième fil (32-24) du premier fil (31a-23a), tandis que, lorsque ledit récepteur téléphonique n'est pas décroché, ledit commutateur connectant en série le troisième fil au premier fil, et
**en ce qu'**un équilibre d'impédance entre la première ligne (T1) et la seconde ligne (T2) est obtenu par une différence de longueur entre les première et seconde lignes au moyen d'une connexion en série desdits premier (31a- 23a) et troisième (32-24) fils dudit cordon en serpentin à l'une desdites première et seconde lignes qui n'est pas connectée audit capteur de courant.

2. Télécopieur pourvu d'un récepteur téléphonique selon la revendication 1, **caractérisé en ce que** ledit capteur de courant (14a) détecte un signal CNG.

3. Télécopieur pourvu d'un récepteur téléphonique selon la revendication 2, **caractérisé en ce que** le télécopieur et le téléphone sont commutés par le signal CNG détecté par ledit capteur de courant (14a).

4. Télécopieur pourvu d'un récepteur téléphonique selon la revendication 1, **caractérisé en ce que** ledit capteur de courant (14a) détecte un décrochage dudit téléphone connecté de manière externe.
